# EUROPÄISCHE PATENTSCHRIFT

(11) **EP 3 750 391 B1**
(45) Veröffentlichungstag und Bekanntmachung des Hinweises auf die Patenterteilung: **02.08.2023**
(21) Anmeldenummer: 19180275.0
(22) Anmeldetag: 14.06.2019
(51) Int. Cl.: A01D 34/00, G05D 1/02

(54) **VERFAHREN ZUM ANDOCKEN VON EINEM AUTONOMEN MOBILEN GRÜNFLÄCHENBEARBEITUNGSROBOTER AN EINE DOCKINGSTATION, DOCKINGSTATIONSYSTEM, GRÜNFLÄCHENBEARBEITUNGSSYSTEM UND SYSTEM**
METHOD OF DOCKING AN AUTONOMOUS MOBILE GREEN AREA PROCESSING ROBOT TO A DOCKING STATION, GREEN AREA PROCESSING ROBOT AND SYSTEM
PROCÉDÉ D'ACCUEIL D'UN ROBOT DE TRAITEMENT DES ESPACES VERTES MOBILE AUTONOME À UNE STATION D'ACCUEIL, SYSTÈME DE STATION D'ACCUEIL, SYSTÈME DE TRAITEMENT DES ESPACES VERTES ET SYSTÈME

(43) Veröffentlichungstag der Anmeldung: 16.12.2020
(73) Patentinhaber: Andreas Stihl AG & Co. KG, 71336 Waiblingen (DE)
(72) Erfinder: RITZER, Peter, 6341 Ebbs (AT); ZÖTTL, Samuel, 6020 Innsbruck (AT); HORNGACHER, Christian, 6365 Kirchberg (AT)
(74) Vertreter: Patentanwälte Ruff, Wilhelm, Beier, Dauster & Partner mbB

(56) Entgegenhaltungen:
- EP-A1- 2 717 110
- EP-A1- 2 829 937
- US-B2- 9 876 370

## Beschreibung

### ANWENDUNGSGEBIET UND STAND DER TECHNIK

Die Erfindung bezieht sich auf ein Verfahren zum Andocken von einem autonomen mobilen Grünflächenbearbeitungsroboter an eine Dockingstation, ein Dockingstationsystem aufweisend eine Dockingstation und ein Grünflächenbearbeitungssystem aufweisend einen autonomen mobilen Grünflächenbearbeitungsroboter und ein System aufweisend ein solches Grünflächenbearbeitungssystem und ein, insbesondere solches, Dockingstationsystem.

Die EP 2 829 937 A1 offenbart ein Arbeitsgerät für einen begrenzten Arbeitsbereich. Das Gerät umfasst: eine Basisstation, ausgelegt, um ein Magnetfeld zu erzeugen, das sich mindestens teilweise über den Arbeitsbereich erstreckt; einen Roboter mit Selbstantrieb, aufweisend einen normalen Betriebsmodus, in dem dieser einen Betriebszyklus im Arbeitsbereich durchführt, und einen Rückkehrmodus zur Basis, in dem dieser automatisch zur Basisstation zurückfährt. Der Roboter mit Selbstantrieb umfasst: Mittel zum Bewegen des Roboters mit Selbstantrieb im Arbeitsbereich als eine Funktion eines Bewegungssteuerungssignals. Zudem umfasst der Roboter mit Selbstantrieb: ein Gyroskop, ausgelegt, um ein Winkelgeschwindigkeitssignal zu erzeugen, das die Messung der Winkelgeschwindigkeit des Roboters mit Selbstantrieb um eine Achse angibt, die im Wesentlichen vertikal zur Ebene des Arbeitsbereichs verläuft; einen Magnetfeldsensor, ausgelegt, um ein Erfassungssignal zu erzeugen, das eine rechte oder linke Position des Roboters mit Selbstantrieb zu einer Reihe angrenzender Kraftlinien des Magnetfelds angibt; eine Verarbeitungseinheit, ausgelegt, um die Bewegung des Roboters mit Selbstantrieb im Arbeitsbereich zu steuern. Die Verarbeitungseinheit umfasst: ein Magnetfeldsuchmodul, ausgelegt, um während einer Magnetfeldsuchphase des Basisrückkehrmodus als eine Funktion der Werte des Erfassungssignals und eines Signals für den zurückgelegten Weg, das die Schätzung des vom Roboter mit Selbstantrieb zurückgelegten Wegs angibt, das Bewegungssteuerungssignal für die Bewegung des Roboters mit Selbstantrieb im Arbeitsbereich zu erzeugen, um die Reihe angrenzender Kraftlinien des Magnetfelds im Arbeitsbereich nach einem vorgegebenen Suchpfad zu suchen; ein Magnetverfolgungsmodul, ausgelegt, um während einer Magnetfeldverfolgungsphase des Basisrückkehrmodus nach der Magnetfeldsuchphase als eine Funktion der Werte des Erfassungssignals, des Winkelgeschwindigkeitssignals und des Signals für den zurückgelegten Weg das Bewegungssteuerungssignal für die Bewegung des Roboters mit Selbstantrieb im Arbeitsbereich zu erzeugen, um mindestens einen Abschnitt der Reihe an gefundenen angrenzenden Kraftlinien mittels einer Vielzahl an Manövern der Kreuzung der Reihe an gefundenen angrenzenden Kraftlinien zu verfolgen, bis die Basisstation erreicht ist.

### AUFGABE UND LÖSUNG

Der Erfindung liegt als Aufgabe die Bereitstellung eines Verfahrens zum Andocken von einem autonomen mobilen Grünflächenbearbeitungsroboter an eine Dockingstation zugrunde, das verbesserte Eigenschaften aufweist. Des Weiteren liegt der Erfindung als Aufgabe die Bereitstellung eines Dockingstationssystems aufweisend eine Dockingstation, eines Grünflächenbearbeitungssystem aufweisend einen autonomen mobilen Grünflächenbearbeitungsroboter und eines Systems aufweisend ein solches Grünflächenbearbeitungssystem und ein, insbesondere solches, Dockingstationsystem zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Dockingstationssystem mit den Merkmalen des Anspruchs 11, ein Grünflächenbearbeitungssystem mit den Merkmalen des Anspruchs 13 und ein System mit den Merkmalen des Anspruchs 14 gelöst. Vorteilhafte Weiterbildungen und/oder Ausgestaltungen der Erfindung sind in den abhängigen Ansprüchen beschrieben.

Das erfindungsgemäße Verfahren ist zum, insbesondere automatischen, Andocken bzw. Eindocken von einem autonomen mobilen Grünflächenbearbeitungsroboter an eine Dockingstation ausgebildet bzw. konfiguriert. Im Bereich der Dockingstation verläuft eine elektrische Leiteranordnung. Die Leiteranordnung ist dazu ausgebildet bzw. konfiguriert, dass durch die Leiteranordnung ein, insbesondere elektrischer und/oder zeitlich, periodischer Strom fließt. Der Strom erzeugt bzw. verursacht ein, insbesondere zeitlich, periodisches Magnetfeld. Der Grünflächenbearbeitungsroboter weist zwei, insbesondere elektrische, Magnetfeldsensoren auf. Die zwei Magnetfeldsensoren sind dazu ausgebildet bzw. konfiguriert, dass das Magnetfeld in den Magnetfeldsensoren jeweils ein, insbesondere elektrisches und/oder zeitlich, periodisches Sensorsignal verursacht bzw. erzeugt. Das Verfahren weist die Schritte auf: a) Bestimmen, insbesondere automatisches Bestimmen, einer Phasenverschiebung bzw. eines Phasenversatzes bzw. einer Phasendifferenz zwischen den zwei Sensorsignalen oder auf den Sensorsignalen basierenden Signalen, b) Steuern, insbesondere automatisches Steuern, eines Bewegens des Grünflächenbearbeitungsroboters zum Andocken in Abhängigkeit der bestimmten Phasenverschiebung, insbesondere zeitlich nach dem Schritt a).

Die Phasenverschiebung zwischen den zwei Sensorsignalen kann weniger oder sogar nicht von eventuellen externen Störungen des Magnetfelds und/oder internen Abweichungen bedingt durch Bauteil- und Fertigungstoleranzen zwischen den Magnetfeldsensoren beeinflusst sein, insbesondere im Unterschied zu Amplituden bzw. Stärken der Sensorsignale. Somit ermöglicht dies, dass das Andocken robust ist. Somit ermöglicht dies, dass das Andocken ohne zeitlich vorheriges Kalibrieren des Andockens erfolgen kann, insbesondere im Unterschied zu einem Andocken in Abhängigkeit von Amplituden, insbesondere einer Differenz der Amplituden, der Sensorsignale. Somit ermöglicht dies, dass das Andocken bei mehreren Dockingstationen erfolgen kann, insbesondere ohne verschiedene Kalibrierungen für die mehreren Dockingstationen, wenn überhaupt möglich.

Insbesondere kann die Dockingstation zum Andocken von dem Grünflächenbearbeitungsroboter ausgebildet sein. Zusätzlich oder alternativ kann der Grünflächenbearbeitungsroboter zum Andocken an die Dockingstation ausgebildet sein.

Autonom kann bedeuten, dass der Grünflächenbearbeitungsroboter sich selbstständig, selbsttätig, selbstbestimmt, selbstgesteuert, selbstgeführt und/oder unabhängig von einem Benutzer bewegen kann.

Der Grünflächenbearbeitungsroboter kann als ein Rasenmähroboter ausgebildet sein.

Die Leiteranordnung kann unter oder in einer Platte, insbesondere einer Boden- und/oder Fahrplatte, verlegt sein. Zusätzlich oder alternativ kann die Leiteranordnung eine, insbesondere geschlossene, Schleife, insbesondere Drahtschleife, sein.

Der Strom kann eine Sinusschwingung aufweisen. Zusätzlich oder alternativ braucht der Strom nicht pausenlos zu fließen. Insbesondere kann der Strom in Form von periodischen Signalbursts fließen mit Pausen zwischen den Signalbursts. Insbesondere kann eine Zeitdauer des Flusses eines jeweiligen der Signalbursts einer Zeitdauer einer jeweiligen der Pausen entsprechen, insbesondere gleichen. Zusätzlich oder alternativ kann die Zeitdauer des Flusses eines jeweiligen der Signalbursts minimal 100 Millisekunden (ms) und/oder maximal 1000 ms sein und/oder die Zeitdauer einer jeweiligen der Pausen kann minimal 100 ms und/oder maximal 1000 ms sein. Weiter zusätzlich oder alternativ kann eine Periodizität zwischen einem jeweiligen der Signalbursts und einer jeweiligen der Pausen fix sein.

Die zwei Magnetfeldsensoren können jeweils zum Erfassen und Umformen des Magnetfelds in das Sensorsignal ausgebildet sein. Zusätzlich oder alternativ können die zwei Magnetfeldsensoren voneinander einen Summensensorabstand aufweisen. Weiter zusätzlich oder alternativ kann der Grünflächenbearbeitungsroboter mindestens drei Magnetfeldsensoren aufweisen. Insbesondere kann ein dritter Magnetfeldsensor mit gegenüber den zwei Magnetfeldsensoren größerem Kopplungsfaktor eine Empfangsverbesserung auf großen Flächen ermöglichen.

Der Schritt b) bzw. das Steuern des Bewegens des Grünflächenbearbeitungsroboters zum Andocken in Abhängigkeit der bestimmten Phasenverschiebung weist auf: Regeln derart, dass die Phasenverschiebung im Bereich zwischen 0 und π, insbesondere π/2, ist. Dies ermöglicht, dass der Grünflächenbearbeitungsroboter der Leiteranordnung folgt.

In einer Weiterbildung der Erfindung weist die Dockingstation eine, insbesondere horizontale, Stationandockachse, insbesondere Stationmittelachse, auf. Die Leiteranordnung verläuft mit mindestens einem Leiterabschnitt etwa parallel zu der Stationandockachse. Dies ermöglicht, dass der Grünflächenbearbeitungsroboter sich zu der Dockingstation, insbesondere einer Mitte der Dockingstation bzw. mittig, bewegt. Insbesondere kann etwa parallel bedeuten, dass der Leiterabschnitt einen Winkel von maximal 5 Grad (°), insbesondere von maximal 2 °, insbesondere von maximal 1 °, zu der Stationandockachse aufweisen kann. Insbesondere kann der Leiterabschnitt parallel zu der Stationandockachse verlaufen.

In einer Ausgestaltung der Erfindung weist der Grünflächenbearbeitungsroboter eine, insbesondere horizontale, Roboterandockachse, insbesondere Robotermittelachse bzw. Roboterlängsachse, auf. Der Schritt b) weist auf: Steuern derart, dass der Grünflächenbearbeitungsroboter sich mit seiner Roboterandockachse etwa koaxial zu der Stationandockachse ausgerichtet zu der Dockingstation bewegt. Dies ermöglicht, dass der Grünflächenbearbeitungsroboter zu der Dockingstation passend ausgerichtet ist. Insbesondere kann etwa koaxial bedeuten, dass die Roboterandockachse einen Winkel von maximal 5 °, insbesondere von maximal 2 °, insbesondere von maximal 1 °, zu der Stationandockachse aufweisen kann. Insbesondere kann die Roboterandockachse koaxial zu der Stationandockachse sein.

In einer Ausgestaltung der Erfindung weist der Grünflächenbearbeitungsroboter eine, insbesondere horizontale, Bewegungsebene, insbesondere Fahrebene, auf. Die zwei Magnetfeldsensoren weisen jeweils eine zu der Bewegungsebene etwa orthogonale, insbesondere vertikale, Erfassungsrichtung auf. Des Weiteren sind die zwei Magnetfeldsensoren dazu ausgebildet bzw. konfiguriert, insbesondere ausgerichtet, dass nur eine zu der Erfassungsrichtung parallele, insbesondere vertikale, Komponente des Magnetfelds in den Magnetfeldsensoren jeweils das Sensorsignal verursacht. Der Schritt b) weist auf: Steuern derart, dass einer der zwei Magnetfeldsensoren in der Erfassungsrichtung über dem mindestens einen Leiterabschnitt positioniert ist und ein anderer der zwei Magnetfeldsensoren in der Erfassungsrichtung nicht über dem mindestens einen Leiterabschnitt positioniert ist. Insbesondere kann dies durch das Steuern derart, dass die Phasenverschiebung im Bereich zwischen 0 und π, insbesondere π/2, sein kann, ermöglicht sein oder werden. Insbesondere kann die Fahrebene durch Fahrräder des Grünflächenroboters definiert sein. Weiter zusätzlich oder alternativ kann etwa orthogonal bedeuten, dass die Erfassungsrichtung einen Winkel von minimal 85 °, insbesondere von minimal 88 °, insbesondere von minimal 89 °, zu der Bewegungsebene aufweisen kann. Insbesondere kann die Erfassungsrichtung orthogonal zu der Bewegungsebene sein. Weiter zusätzlich oder alternativ können die Erfassungsrichtungen zueinander parallel sein. Weiter zusätzlich oder alternativ können die zwei Magnetfeldsensoren jeweils zum Erfassen nur der zu der Erfassungsrichtung parallelen Komponente des Magnetfelds ausgebildet sein. Weiter zusätzlich oder alternativ kann der Leiterabschnitt etwa parallel zu der Bewegungsebene verlaufen.

In einer Ausgestaltung der Erfindung weist die Leiteranordnung mindestens zwei Leiterabschnitte auf. Die zwei Leiterabschnitte verlaufen jeweils etwa parallel zu der Stationandockachse, insbesondere etwa parallel zu der Bewegungsebene. Des Weiteren weisen die zwei Leiterabschnitte voneinander in einer zu der Stationandockachse orthogonalen, insbesondere horizontalen und/oder zu der Bewegungsebene parallelen, Leiterabstandsrichtung einen Summenleiterabstand auf. Die zwei Magnetfeldsensoren weisen voneinander in einer zu der Roboterandockachse orthogonalen, insbesondere horizontalen und/oder zu der Bewegungsebene parallelen, Sensorabstandsrichtung einen Summensensorabstand auf. Der Summenleiterabstand, insbesondere ein Wert des Summenleiterabstands, ist verschieden von dem, insbesondere größer als der, Summensensorabstand, insbesondere ein Wert des Summensensorabstands. Insbesondere kann dies das Steuern derart, dass die Phasenverschiebung im Bereich zwischen 0 und π, insbesondere π/2, sein kann, ermöglichen. Zusätzlich oder alternativ kann dies das Steuern derart, dass der eine Magnetfeldsensor in der Erfassungsrichtung über dem einen Leiterabschnitt positioniert sein kann und der andere Magnetfeldsensor in der Erfassungsrichtung nicht über dem anderen Leiterabschnitt positioniert sein kann, ermöglichen. Insbesondere kann der andere Magnetfeldsensor dem anderen Leiterabschnitt näher als dem einen Leiterabschnitt positioniert sein oder werden. Zusätzlich oder alternativ kann der eine Magnetfeldsensor dazu ausgebildet bzw. positioniert sein, dass nur die zu der Erfassungsrichtung parallele Komponente des Magnetfelds des einen Leiterabschnitts in dem einen Magnetfeldsensor das Sensorsignal verursachen kann, und der andere Magnetfeldsensor kann dazu ausgebildet bzw. positioniert sein, dass nur die zu der Erfassungsrichtung parallele Komponente des Magnetfelds des anderen Leiterabschnitts in dem anderen Magnetfeldsensor das Sensorsignal verursachen kann. Weiter zusätzlich oder alternativ können die zwei Magnetfeldsensoren entlang der Roboterandockachse gleiche Abstände von einer Vorderseite bzw. Front des Grünflächenbearbeitungsroboters aufweisen. Weiter zusätzlich oder alternativ können die Leiterabstandsrichtung und die Sensorabstandsrichtung parallel sein.

In einer Ausgestaltung der Erfindung weist die Leiteranordnung mindestens zwei Leiterabschnitte auf. Die zwei Leiterabschnitte verlaufen jeweils etwa parallel zu der Stationandockachse, insbesondere etwa parallel zu der Bewegungsebene. Des Weiteren weisen die zwei Leiterabschnitte von der Stationandockachse, insbesondere Stationmittelachse, in einer zu der Stationandockachse orthogonalen, insbesondere horizontalen und/oder zu der Bewegungsebene parallelen, Leiterabstandsrichtung verschiedene Leiterabstände, insbesondere verschiedene Werte der Leiterabstände, auf.

Zusätzlich oder alternativ weisen die zwei Magnetfeldsensoren von der Roboterandockachse, insbesondere Robotermittelachse, in einer zu der Roboterandockachse orthogonalen, insbesondere horizontalen und/oder zu der Bewegungsebene parallelen, Sensorabstandsrichtung gleiche Sensorabstände, insbesondere gleiche Werte der Sensorabstände, auf.

Insbesondere kann dies das Steuern derart, dass die Phasenverschiebung im Bereich zwischen 0 und π, insbesondere π/2, sein kann, ermöglichen. Zusätzlich oder alternativ kann dies das Steuern derart, dass der eine Magnetfeldsensor in der Erfassungsrichtung über dem einen Leiterabschnitt positioniert sein kann und der andere Magnetfeldsensor in der Erfassungsrichtung nicht über dem anderen Leiterabschnitt positioniert sein kann, ermöglichen. Insbesondere kann der andere Magnetfeldsensor dem anderen Leiterabschnitt näher als dem einen Leiterabschnitt positioniert sein oder werden. Zusätzlich oder alternativ kann der eine Magnetfeldsensor dazu ausgebildet bzw. positioniert sein, dass nur die zu der Erfassungsrichtung parallele Komponente des Magnetfelds des einen Leiterabschnitts in dem einen Magnetfeldsensor das Sensorsignal verursachen kann, und der andere Magnetfeldsensor kann dazu ausgebildet bzw. positioniert sein, dass nur die zu der Erfassungsrichtung parallele Komponente des Magnetfelds des anderen Leiterabschnitts in dem anderen Magnetfeldsensor das Sensorsignal verursachen kann. Weiter zusätzlich oder alternativ können die zwei Magnetfeldsensoren entlang der Roboterandockachse gleiche Abstände von einer Vorderseite bzw. Front des Grünflächenbearbeitungsroboters aufweisen. Weiter zusätzlich oder alternativ können die Leiterabstandsrichtung und die Sensorabstandsrichtung parallel sein.

In einer Ausgestaltung der Erfindung ist die Dockingstation als eine, insbesondere elektrische, Ladestation ausgebildet bzw. konfiguriert. Des Weiteren weist die Dockingstation mindestens einen, insbesondere elektrischen, Stationladeanschluss auf. Die Dockingstation ist zum, insbesondere automatischen und/oder elektrischen, Aufladen durch den mindestens einen Stationladeanschluss ausgebildet bzw. konfiguriert. Der mindestens eine Stationladeanschluss definiert die Stationandockachse.

Zusätzlich oder alternativ ist der Grünflächenbearbeitungsroboter als ein, insbesondere elektrisch, aufladbarer Grünflächenbearbeitungsroboter ausgebildet bzw. konfiguriert. Des Weiteren weist der Grünflächenbearbeitungsroboter mindestens einen, insbesondere elektrischen, Roboterladeanschluss auf. Der Grünflächenbearbeitungsroboter ist zum, insbesondere automatischen und/oder elektrischen, Aufladen durch den mindestens einen Roboterladeanschluss ausgebildet bzw. konfiguriert. Der mindestens eine Roboterladeanschluss definiert die Roboterandockachse.

Dies ermöglicht, dass die Dockingstation den, insbesondere angedockten, Grünflächenbearbeitungsroboter aufladen kann.

Insbesondere können der Stationladeanschluss und der Roboterladeanschluss sich zum Aufladen berühren. Zusätzlich oder alternativ können/kann der Stationladeanschluss und/oder der Roboterladeanschluss jeweils einen Ladekontakt aufweisen oder sein. Weiter zusätzlich oder alternativ kann der Grünflächenbearbeitungsroboter einen Akkumulator aufweisen. Der Akkumulator kann zur Versorgung eines Bearbeitungsantriebs, insbesondere eines Rasenmähantriebs, und/oder eines Bewegungsantriebs, insbesondere eines Fahrantriebs, des Grünflächenbearbeitungsroboters ausgebildet sein. Des Weiteren kann der Akkumulator zum Aufladen durch den Roboterladeanschluss ausgebildet sein.

In einer Weiterbildung der Erfindung weisen die zwei Magnetfeldsensoren jeweils eine, insbesondere vertikale und/oder zu der Bewegungsebene orthogonale, Erfassungsrichtung auf. Des Weiteren sind die zwei Magnetfeldsensoren dazu ausgebildet bzw. konfiguriert, insbesondere ausgerichtet, dass nur eine zu der Erfassungsrichtung parallele, insbesondere vertikale, Komponente des Magnetfelds in den Magnetfeldsensoren jeweils das Sensorsignal verursacht. Der Schritt b) weist auf: Steuern derart, dass die Erfassungsrichtung eines der zwei Magnetfeldsensoren, insbesondere an der Position des einen Magnetfeldsensors, orthogonal zu dem Magnetfeld ist und die Erfassungsrichtung eines anderen der zwei Magnetfeldsensoren, insbesondere an der Position des anderen Magnetfeldsensors, nicht-orthogonal, insbesondere parallel, zu dem Magnetfeld ist. Insbesondere kann dies durch das Steuern derart, dass die Phasenverschiebung im Bereich zwischen 0 und π, insbesondere π/2, sein kann, ermöglicht sein oder werden. Zusätzlich oder alternativ kann dies das Steuern derart, dass der eine Magnetfeldsensor in der Erfassungsrichtung über dem mindestens einen Leiterabschnitt positioniert sein kann und der andere Magnetfeldsensor in der Erfassungsrichtung nicht über dem mindestens einen Leiterabschnitt positioniert sein kann, ermöglichen. Insbesondere können die Erfassungsrichtungen zueinander parallel sein. Zusätzlich oder alternativ können die zwei Magnetfeldsensoren jeweils zum Erfassen nur der zu der Erfassungsrichtung parallelen Komponente des Magnetfelds ausgebildet sein. Weiter zusätzlich oder alternativ kann der eine Magnetfeldsensor dazu ausgebildet bzw. positioniert sein, dass nur die zu der Erfassungsrichtung parallele Komponente des Magnetfelds des einen Leiterabschnitts in dem einen Magnetfeldsensor das Sensorsignal verursachen kann, und der andere Magnetfeldsensor kann dazu ausgebildet bzw. positioniert sein, dass nur die zu der Erfassungsrichtung parallele Komponente des Magnetfelds des anderen Leiterabschnitts in dem anderen Magnetfeldsensor das Sensorsignal verursachen kann. Weiter zusätzlich oder alternativ kann das Steuern derart sein, dass die Erfassungsrichtung des einen Magnetfeldsensors orthogonal zu dem Magnetfeld des einen Leiterabschnitts sein kann und die Erfassungsrichtung des anderen Magnetfeldsensors nicht-orthogonal zu dem Magnetfeld des anderen Leiterabschnitts sein kann.

In einer Weiterbildung der Erfindung weisen die zwei Magnetfeldsensoren jeweils eine, insbesondere elektrische, Spule auf. Die zwei Spulen sind dazu ausgebildet bzw. konfiguriert, dass das Magnetfeld in den Spulen jeweils das Sensorsignal verursacht bzw. induziert. Dies kann ermöglichen, dass die zwei Magnetfeldsensoren dazu ausgebildet sein können, dass nur die zu der Erfassungsrichtung parallele Komponente des Magnetfelds in den Magnetfeldsensoren jeweils das Sensorsignal verursachen kann. Insbesondere können die zwei Spulen jeweils zum Erfassen des Magnetfelds ausgebildet sein.

In einer Weiterbildung der Erfindung weist das Verfahren den Schritt auf: Positionieren, insbesondere automatisches Positionieren, des Grünflächenbearbeitungsroboters im Bereich des Magnetfelds derart, dass das Magnetfeld in mindestens einem der zwei Magnetfeldsensoren, insbesondere jeweils, das Sensorsignal verursacht. Durchführen des Schritts a) und/oder des Schritts b) zeitlich danach, insbesondere zeitlich nach dem Positionieren. Insbesondere kann das Positionieren derart sein, dass mindestens einer der zwei Magnetfeldsensoren das Magnetfeld erfassen kann. Zusätzlich oder alternativ kann das Positionieren mittels eines weiteren Magnetfelds einer weiteren elektrischen Leiteranordnung erfolgen. Insbesondere kann die Leiteranordnung als Dockleiteranordnung bezeichnet werden und/oder die weitere Leiteranordnung kann als Begrenzungsleiteranordnung bezeichnet werden.

Das erfindungsgemäße Dockingstationsystem weist eine, insbesondere die, Dockingstation und eine, insbesondere die, eine elektrische Leiteranordnung im Bereich der Dockingstation auf. Die Dockingstation ist zum Andocken von einem, insbesondere dem, autonomen mobilen Grünflächenbearbeitungsroboter ausgebildet bzw. konfiguriert. Des Weiteren weist die Dockingstation eine, insbesondere die, Stationandockachse auf. Die Leiteranordnung weist, insbesondere die, mindestens zwei Leiterabschnitte auf. Die zwei Leiterabschnitte verlaufen jeweils etwa parallel zu der Stationandockachse. Außerdem weisen die zwei Leiterabschnitte von der Stationandockachse, insbesondere Stationmittelachse, in einer, insbesondere der, zu der Stationandockachse orthogonalen Leiterabstandsrichtung verschiedene Leiterabstände auf. Die Leiteranordnung ist dazu ausgebildet bzw. konfiguriert, dass durch die Leiteranordnung ein, insbesondere der, periodischer Strom fließt. Der Strom erzeugt ein, insbesondere das, periodisches Magnetfeld. Die Leiteranordnung ist eine Schleife.

Das Dockingstationsystem kann die gleichen Vorteile ermöglichen wie das zuvor beschriebene Verfahren.

Insbesondere können/kann die Dockingstation und/oder die Leiteranordnung wie zuvor für das Verfahren beschrieben ausgebildet sein. Insbesondere kann das Dockingstationsystem die Platte aufweisen. Zusätzlich oder alternativ kann das Dockingstationsystem, insbesondere die Dockingstation, eine Stromquelle aufweisen. Die Stromquelle kann zum Erzeugen des Stroms durch die Leiteranordnung ausgebildet sein.

In einer Weiterbildung der Erfindung weisen die zwei Leiterabschnitte nah an der Dockingstation von der Stationandockachse, insbesondere in der Leiterabstandsrichtung, die verschiedenen, insbesondere kleinen, Leiterabstände, insbesondere Werte der Leiterabstände, auf. Des Weiteren weisen die zwei Leiterabschnitte entfernt von der Dockingstation von der Stationandockachse, insbesondere in der Leiterabstandsrichtung, gleiche, insbesondere große, Leiterabstände, insbesondere Werte der Leiterabstände, auf. Dies ermöglicht, dass das Magnetfeld von der Dockingstation mit dem angedockten Grünflächenbearbeitungsroboter weit weg reichen bzw. ferner wirken kann und somit einen weiteren Grünflächenbearbeitungsroboter fern halten kann.

Das erfindungsgemäße Grünflächenbearbeitungssystem weist einen, insbesondere den, autonomen mobilen Grünflächenbearbeitungsroboter, eine, insbesondere elektrische, Bestimmungseinrichtung und eine, insbesondere elektrische, Steuerungseinrichtung auf. Der Grünflächenbearbeitungsroboter ist zum, insbesondere automatischen, Andocken an eine, insbesondere die, Dockingstation ausgebildet bzw. konfiguriert. Des Weiteren weist der Grünflächenbearbeitungsroboter, insbesondere die, zwei Magnetfeldsensoren auf. Die zwei Magnetfeldsensoren sind dazu ausgebildet bzw. konfiguriert, dass ein, insbesondere das, periodisches Magnetfeld in den Magnetfeldsensoren jeweils ein, insbesondere das, periodisches Sensorsignal verursacht. Die Bestimmungseinrichtung ist zum, insbesondere automatischen, Bestimmen einer, insbesondere der, Phasenverschiebung zwischen den zwei Sensorsignalen oder auf den Sensorsignalen basierenden Signalen ausgebildet bzw. konfiguriert. Die Steuerungseinrichtung ist zum, insbesondere automatischen, Steuern eines, insbesondere des, Bewegens des Grünflächenbearbeitungsroboters zum Andocken in Abhängigkeit der bestimmten Phasenverschiebung ausgebildet bzw. konfiguriert. Das Steuern des Bewegens des Grünflächenbearbeitungsroboters zum Andocken in Abhängigkeit der bestimmten Phasenverschiebung weist auf: Regeln derart, dass die Phasenverschiebung im Bereich zwischen 0 und π ist.

Das Grünflächenbearbeitungssystem kann die gleichen Vorteile ermöglichen wie das zuvor beschriebene Verfahren.

Insbesondere kann das Grünflächenbearbeitungssystem zum Durchführen des zuvor beschriebenen Verfahrens ausgebildet sein. Zusätzlich oder alternativ kann der Grünflächenbearbeitungsroboter wie zuvor für das Verfahren beschrieben ausgebildet sein. Weiter zusätzlich oder alternativ kann der Grünflächenbearbeitungsroboter die Bestimmungseinrichtung und/oder die Steuerungseinrichtung aufweisen.

Das erfindungsgemäße System weist mindestens ein, insbesondere das, Grünflächenbearbeitungssystem wie zuvor beschrieben und mindestens ein, insbesondere das, Dockingstationsystem, insbesondere wie zuvor beschrieben, auf. Das Dockingstationsystem weist eine, insbesondere die, Dockingstation und eine, insbesondere die, im Bereich der Dockingstation verlaufende elektrische Leiteranordnung auf. Die Dockingstation ist zum Andocken von dem Grünflächenbearbeitungsroboter ausgebildet bzw. konfiguriert. Die Leiteranordnung ist dazu ausgebildet bzw. konfiguriert, dass durch die Leiteranordnung ein, insbesondere der, periodischer Strom fließt. Der Strom erzeugt ein, insbesondere das, periodisches Magnetfeld. Insbesondere kann das System mehrere Grünflächenbearbeitungssysteme und/oder mehrere Dockingstationsysteme aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Draufsicht auf ein erfindungsgemäßes System aufweisend ein erfindungsgemäßes Dockingstationssystem aufweisend eine Dockingstation und eine elektrische Leiteranordnung und ein erfindungsgemäßes Grünflächenbearbeitungssystem aufweisend einen autonomen mobilen Grünflächenbearbeitungsroboter, eine Bestimmungseinrichtung und eine Steuerungseinrichtung und ein erfindungsgemäßes Verfahren zum Andocken von dem Grünflächenbearbeitungsroboter an die Dockingstation,
- Fig. 2: eine Seitenansicht auf die Leiteranordnung der Fig. 1 aufweisend mindestens zwei Leiterabschnitte, durch die ein periodischer Strom fließt, der ein periodisches Magnetfeld erzeugt,
- Fig. 3: eine Draufsicht auf die Leiteranordnung der Fig. 1 und zwei Magnetfeldsensoren des Grünflächenbearbeitungsroboters der Fig. 1,
- Fig. 4: einen Graph von Amplituden von periodischen Sensorsignalen der Magnetfeldsensoren der Fig. 3 über der Zeit,
- Fig. 5: eine weitere Draufsicht auf die Leiteranordnung und die Magnetfeldsensoren der Fig. 1,
- Fig. 6: einen Graph von den Amplituden von den Sensorsignalen der Magnetfeldsensoren der Fig. 5 über der Zeit,
- Fig. 7: eine weitere Draufsicht auf die Leiteranordnung und die Magnetfeldsensoren der Fig. 1, und
- Fig. 8: einen Graph einer Phasenverschiebung zwischen den Sensorsignalen der Magnetfeldsensoren der Fig. 3, 5 und 7.

### DETAILLIERTE BESCHREIBUNG DER AUSFÜHRUNGSBEISPIELE

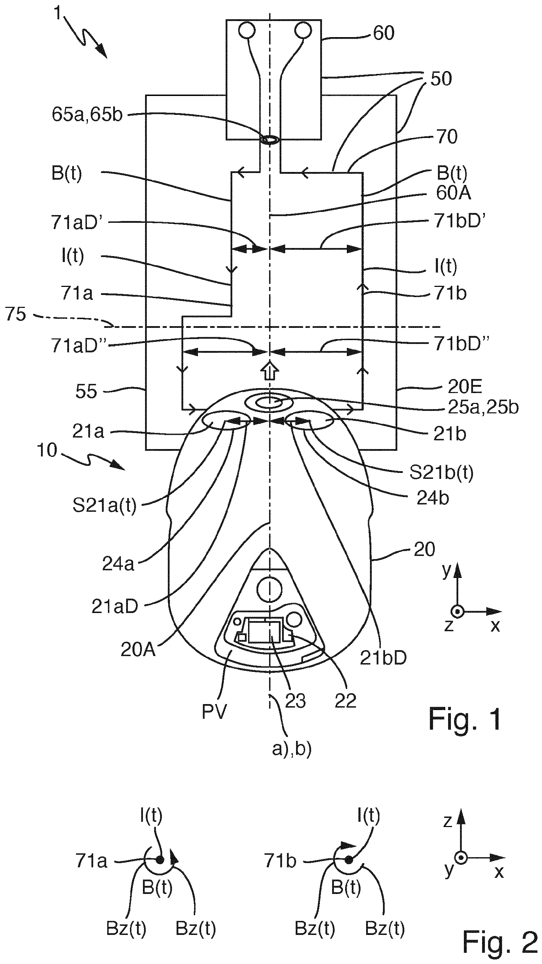

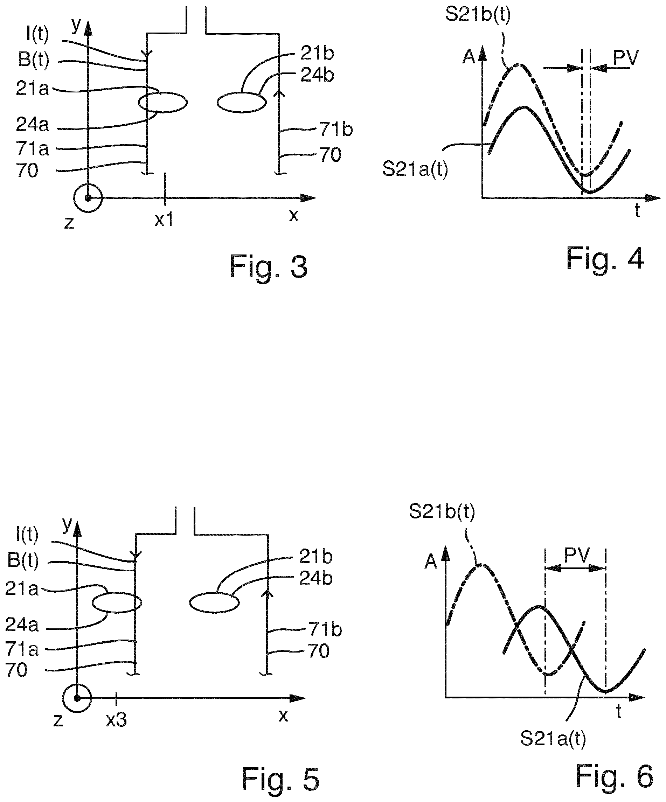

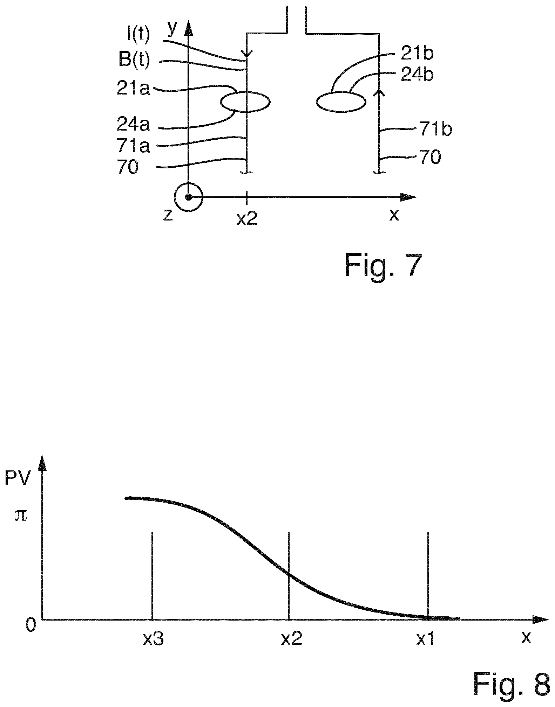

Fig. 1 zeigt ein erfindungsgemäßes Verfahren. Das Verfahren ist zum Andocken von einem autonomen mobilen Grünflächenbearbeitungsroboter 20 an eine Dockingstation 60 ausgebildet. Im Bereich der Dockingstation 60 verläuft eine elektrische Leiteranordnung 70. Die Leiteranordnung 70 ist dazu ausgebildet, dass durch die Leiteranordnung 70 ein periodischer Strom l(t) fließt, wie in Fig. 1 bis 3, 5 und 7 gezeigt. Der Strom I(t) erzeugt ein periodisches Magnetfeld B(t). Der Grünflächenbearbeitungsroboter 20 weist zwei Magnetfeldsensoren 21a, 21b auf. Die zwei Magnetfeldsensoren 21a, 21b sind dazu ausgebildet, dass das Magnetfeld B(t) in den Magnetfeldsensoren 21a, 21b jeweils ein periodisches Sensorsignal S21a(t), S21b(t) verursacht, wie in Fig. 4 und 6 gezeigt. Das Verfahren weist die Schritte auf: a) Bestimmen einer Phasenverschiebung PV zwischen den zwei Sensorsignalen S21a(t), S21 b(t), wie in Fig. 8 gezeigt. b) Steuern eines Bewegens des Grünflächenbearbeitungsroboters 20 zum Andocken in Abhängigkeit der bestimmten Phasenverschiebung PV.

Das erfindungsgemäße System 1 weist mindestens ein erfindungsgemäßes Grünflächenbearbeitungssystem 10 und mindestens ein erfindungsgemäßes Dockingstationsystem 50 auf.

Das Grünflächenbearbeitungssystem 10 weist den Grünflächenbearbeitungsroboter 20, eine Bestimmungseinrichtung 22 und eine Steuerungseinrichtung 23 auf. Der Grünflächenbearbeitungsroboter 20 ist zum Andocken an die Dockingstation 60 ausgebildet. Des Weiteren weist der Grünflächenbearbeitungsroboter 20 die zwei Magnetfeldsensoren 21a, 21b auf. Die zwei Magnetfeldsensoren 21a, 21b sind dazu ausgebildet, dass das periodische Magnetfeld B(t) in den Magnetfeldsensoren 21a, 21b jeweils das periodische Sensorsignal S21a(t), S21b(t) verursacht. Die Bestimmungseinrichtung 22 ist zum Bestimmen der Phasenverschiebung PV zwischen den zwei Sensorsignalen S21a(t), S21b(t) ausgebildet. Die Steuerungseinrichtung 23 ist zum Steuern des Bewegens des Grünflächenbearbeitungsroboters 20 zum Andocken in Abhängigkeit der bestimmten Phasenverschiebung PV ausgebildet.

Im gezeigten Ausführungsbeispiel ist das Grünflächenbearbeitungssystem 10 zum Durchführen des Verfahrens ausgebildet. Zusätzlich weist im gezeigten Ausführungsbeispiel der Grünflächenbearbeitungsroboter 20 die Bestimmungseinrichtung 22 und die Steuerungseinrichtung 23 auf.

Das Dockingstationsystem 50 weist die Dockingstation 60 und die im Bereich der Dockingstation 60 verlaufende elektrische Leiteranordnung 70 auf. Die Dockingstation 60 ist zum Andocken von dem Grünflächenbearbeitungsroboter 20 ausgebildet. Die Leiteranordnung 70 ist dazu ausgebildet, dass durch die Leiteranordnung 70 der periodische Strom I(t) fließt. Der Strom I(t) erzeugt das periodische Magnetfeld B(t).

Im gezeigten Ausführungsbeispiel weist das Dockingstationsystem 50 eine Platte 55 auf. Die Leiteranordnung 70 ist in der Platte 55 verlegt.

Im Detail weist die Dockingstation 60 eine Stationandockachse 60A, insbesondere Stationmittelachse, auf, in Fig. 1 in einer horizontalen Richtung y. Die Leiteranordnung 70 verläuft mit mindestens einem Leiterabschnitt 71a, 71b etwa parallel zu der Stationandockachse 60A.

Im gezeigten Ausführungsbeispiel weist die Leiteranordnung 70 mindestens zwei Leiterabschnitte 71a, 71b auf. Die zwei Leiterabschnitte 71a, 71b verlaufen jeweils etwa parallel zu der Stationandockachse 60A.

Des Weiteren weisen die zwei Leiterabschnitte 71a, 71b von der Stationandockachse 60A in einer zu der Stationandockachse 60A orthogonalen, in Fig. 1 horizontalen, Leiterabstandsrichtung x verschiedene Leiterabstände 71aD', 71bD` auf.

Im Detail weisen die zwei Leiterabschnitte 71a, 71b nah an der Dockingstation 60 von der Stationandockachse 60A die verschiedenen, im gezeigten Ausführungsbeispiel kleinen, Leiterabstände 71a,D', 71bD' auf. Außerdem weisen die zwei Leiterabschnitte 71a, 71b entfernt von der Dockingstation 60 von der Stationandockachse 60A gleiche, im gezeigten Ausführungsbeispiel große, Leiterabstände 71aD", 71bD" auf.

Weiter weisen die zwei Leiterabschnitte 71a, 71b voneinander in der zu der Stationandockachse 60A orthogonalen Leiterabstandsrichtung x, insbesondere nah an der Dockingstation 60, einen Summenleiterabstand 71aD'+71bD' auf.

Im gezeigten Ausführungsbeispiel ist der Summenleiterabtsand 71aD'+71bD' eine Summe der verschiedenen Leiterabstände 71aD', 71bD'.

Zudem weist der Grünflächenbearbeitungsroboter 20 eine Roboterandockachse 20A, insbesondere Robotermittelachse, auf, in Fig. 1 in der horizontalen Richtung y. Der Schritt b) weist auf: Steuern derart, dass der Grünflächenbearbeitungsroboter 20 sich mit seiner Roboterandockachse 20A etwa koaxial zu der Stationandockachse 60A ausgerichtet zu der Dockingstation 60 bewegt.

Des Weiteren weisen die zwei Magnetfeldsensoren 21a, 21b von der Roboterandockachse 20A in einer zu der Roboterandockachse 20A orthogonalen, in Fig. 1 horizontalen, Sensorabstandsrichtung x gleiche Sensorabstände 21aD, 21bD auf.

Außerdem weisen die zwei Magnetfeldsensoren 21a, 21b voneinander in der zu der Roboterandockachse 20A orthogonalen Sensorabstandsrichtung x einen Summensensorabstand 21aD+21bD auf. Der Summenleiterabstand 71aD'+71bD' ist verschieden von dem, im gezeigten Ausführungsbeispiel größer als der, Summensensorabstand 21aD+21bD.

Im gezeigten Ausführungsbeispiel ist der Summensensorabstand 21aD+21bD eine Summe der gleichen Sensorabstände 21aD, 21bD.

Weiter ist die Dockingstation 60 als eine Ladestation ausgebildet. Zudem weist die Dockingstation 60 mindestens einen Stationladeanschluss 65a, 65b auf, im gezeigten Ausführungsbeispiel zwei Stationladeanschlüsse 65a, 65b. Die Dockingstation ist zum Aufladen durch den mindestens einen Stationladeanschluss 62, 65b ausgebildet. Der mindestens eine Stationladeanschluss 65a, 65b definiert die Stationandockachse 60A.

Des Weiteren ist der Grünflächenbearbeitungsroboter 20 als ein aufladbarer Grünflächenbearbeitungsroboter ausgebildet. Außerdem weist der Grünflächenbearbeitungsroboter 20 mindestens einen Roboterladeanschluss 25a, 25b auf, im gezeigten Ausführungsbeispiel zwei Roboterladeanschlüsse 25a, 25b. Der Grünflächenbearbeitungsroboter 20 ist zum Aufladen durch den mindestens einen Roboterladeanschluss 25a, 25b ausgebildet. Der mindestens eine Roboterladeanschluss 25a, 25b definiert die Roboterandockachse 20A.

Im gezeigten Ausführungsbeispiel ist die Leiteranordnung 70 eine, insbesondere geschlossene, Schleife. Durch den einen Leiterabschnitt 71a fließt der Strom I(t) von der Dockingstation 60 weg, im gezeigten Ausführungsbeispiel entgegen der horizontalen Richtung y. Der Strom I(t) durch den einen Leiterabschnitt 71a erzeugt das Magnetfeld B(t) mit einer Feldlinienrichtung, wie in Fig. 2 gezeigt. Durch den anderen Leiterabschnitt 71b fließt der Strom I(t) zu der Dockingstation 60 hin, im gezeigten Ausführungsbeispiel in der horizontalen Richtung y. Der Strom I(t) durch den anderen Leiterabschnitt 71b erzeugt das Magnetfeld B(t) mit einer entgegengesetzten Feldlinienrichtung.

Weiter weist der Schritt b) auf: Steuern derart, dass die Phasenverschiebung PV im Bereich zwischen 0 und π, insbesondere π/2, ist, wie in Fig. 1 und 8 gezeigt.

Zudem weist der Grünflächenbearbeitungsroboter 20 eine, in Fig. 1 horizontale, Bewegungsebene 20E auf.

Des Weiteren weisen die zwei Magnetfeldsensoren 21a, 21b jeweils eine, insbesondere zu der Bewegungsebene 20E etwa orthogonale und/oder in Fig. 1 und 2 vertikale, Erfassungsrichtung z auf. Außerdem sind die zwei Magnetfeldsensoren 21a, 21b dazu ausgebildet, dass nur eine zu der Erfassungsrichtung z parallele, in Fig. 1 und 2 vertikale, Komponente Bz (t) des Magnetfelds B(t) in den Magnetfeldsensoren 21a, 21b jeweils das Sensorsignal S21a(t), S21b(t) verursacht.

Im gezeigten Ausführungsbeispiel ist einer der zwei Magnetfeldsensoren 21a dazu ausgebildet bzw. vorgesehen, dass nur die zu der Erfassungsrichtung z parallele Komponente Bz(t) des Magnetfelds B(t) des einen Leiterabschnitts 71a in dem einen Magnetfeldsensor 21a das Sensorsignal S21a(t) verursacht, und ein anderer der zwei Magnetfeldsensoren 21b ist dazu ausgebildet bzw. vorgesehen, dass nur die zu der Erfassungsrichtung z parallele Komponente Bz(t) des Magnetfelds B(t) des anderen Leiterabschnitts 71b in dem anderen Magnetfeldsensor 21b das Sensorsignal S21b(t) verursacht.

Zudem weist der Schritt b) auf: Steuern derart, dass die Erfassungsrichtung z des einen Magnetfeldsensors 21a orthogonal zu dem Magnetfeld B(t), im gezeigten Ausführungsbeispiel des einen Leiterabschnitts 71a, ist und die Erfassungsrichtung z des anderen Magnetfeldsensors 21b nicht-orthogonal zu dem Magnetfeld B(t), im gezeigten Ausführungsbeispiel des anderen Leiterabschnitts 71b, ist.

Weiter weist der Schritt b) auf: Steuern derart, dass der eine Magnetfeldsensor 21a in der Erfassungsrichtung z über dem mindestens einen, im gezeigten Ausführungsbeispiel dem einen, Leiterabschnitt 71a positioniert ist und der andere Magnetfeldsensor 21b in der Erfassungsrichtung z nicht über dem mindestens einen, im gezeigten Ausführungsbeispiel dem anderen, Leiterabschnitt 71b positioniert ist, insbesondere wobei der andere Magnetfeldsensor 21b dem anderen Leiterabschnitt 71b näher als dem einen Leiterabschnitt 71a positioniert ist.

Zudem weisen die zwei Magnetfeldsensoren 21a, 21b jeweils eine Spule 24a, 24b auf. Die zwei Spulen 24a, 24b sind dazu ausgebildet, dass das Magnetfeld B(t) in den Spulen 24a, 24b jeweils das Sensorsignal S21a(t), S21b(t) verursacht.

Im gezeigten Ausführungsbeispiel weist der periodische Strom I(t) eine Sinusschwingung auf. Somit weisen die zwei Sensorsignale S21a(t), S21b(t) jeweils eine Sinusschwingung auf, wie in Fig. 4 und 6 gezeigt.

In Fig. 3 ist der eine Magnetfeldsensor 21a, insbesondere die eine Spule 24a, innerhalb der Leiteranordnung 70 in Form der Schleife bzw. rechts von dem einen Leiterabschnitt 71a positioniert. Somit ist der eine Magnetfeldsensor 21a nicht über dem einen Leiterabschnitt 71a positioniert. Somit ist die Erfassungsrichtung z des einen Magnetfeldsensors 21a nicht-orthogonal zu dem Magnetfeld B(t) des einen Leiterabschnitts 71a. Der andere Magnetfeldsensor 21b, insbesondere die eine Spule 24b, ist innerhalb der Leiteranordnung 70 in Form der Schleife bzw. links von dem anderen Leiterabschnitt 71b positioniert. Somit ist der andere Magnetfeldsensor 21b nicht über dem anderen Leiterabschnitt 71b positioniert. Somit ist die Erfassungsrichtung z des anderen Magnetfeldsensors 21b nicht-orthogonal zu dem Magnetfeld B(t) des anderen Leiterabschnitts 71b. Somit sind die Sensorsignale S21a(t), S21b(t) bzw. ihre Sinusschwingungen gleichphasig, wie in Fig. 4 gezeigt. Somit ist die Phasenverschiebung PV 0, wie in Fig. 4 und 8 gezeigt. Somit wird das Bewegen des Grünflächenbearbeitungsroboters 20 zum Andocken in Fig. 3 nach links, und insbesondere oben, gesteuert und somit derart, dass der eine Magnetfeldsensor 21a in der Erfassungsrichtung z über dem einen Leiterabschnitt 71a positioniert ist, und somit dass die Erfassungsrichtung z des einen Magnetfeldsensors 21a orthogonal zu dem Magnetfeld B(t) des einen Leiterabschnitts 71a ist, und somit dass die Phasenverschiebung PV im Bereich zwischen 0 und π, insbesondere π/2, ist.

In Fig. 5 ist der eine Magnetfeldsensor 21a, insbesondere die eine Spule 24a, außerhalb der Leiteranordnung 70 in Form der Schleife bzw. links von dem einen Leiterabschnitt 71a positioniert. Somit ist der eine Magnetfeldsensor 21a nicht über dem einen Leiterabschnitt 71a positioniert. Somit ist die Erfassungsrichtung z des einen Magnetfeldsensors 21a nicht-orthogonal zu dem Magnetfeld B(t) des einen Leiterabschnitts 71a. Der andere Magnetfeldsensor 21b, insbesondere die eine Spule 24b, ist innerhalb der Leiteranordnung 70 in Form der Schleife bzw. links von dem anderen Leiterabschnitt 71b positioniert. Somit ist der andere Magnetfeldsensor 21b nicht über dem anderen Leiterabschnitt 71b positioniert. Somit ist die Erfassungsrichtung z des anderen Magnetfeldsensors 21b nicht-orthogonal zu dem Magnetfeld B(t) des anderen Leiterabschnitts 71b. Somit sind die Sensorsignale S21a(t), S21b(t) bzw. ihre Sinusschwingungen gegenphasig, wie in Fig. 6 gezeigt. Somit ist die Phasenverschiebung PV π, wie in Fig. 6 und 8 gezeigt. Somit wird das Bewegen des Grünflächenbearbeitungsroboters 20 zum Andocken in Fig. 5 nach rechts, und insbesondere oben, gesteuert und somit derart, dass der eine Magnetfeldsensor 21a in der Erfassungsrichtung z über dem einen Leiterabschnitt 71a positioniert ist, und somit dass die Erfassungsrichtung z des einen Magnetfeldsensors 21a orthogonal zu dem Magnetfeld B(t) des einen Leiterabschnitts 71a ist, und somit dass die Phasenverschiebung PV im Bereich zwischen 0 und π, insbesondere π/2, ist.

In Fig. 7 ist der eine Magnetfeldsensor 21a, insbesondere die eine Spule 24a, über der Leiteranordnung 70 bzw. über dem einen Leiterabschnitt 71a positioniert. Somit ist die Erfassungsrichtung z des einen Magnetfeldsensors 21a orthogonal zu dem Magnetfeld B(t) des einen Leiterabschnitts 71a. Der andere Magnetfeldsensor 21b, insbesondere die eine Spule 24b, ist innerhalb der Leiteranordnung 70 in Form der Schleife bzw. links von dem anderen Leiterabschnitt 71b positioniert. Somit ist der andere Magnetfeldsensor 21b nicht über dem anderen Leiterabschnitt 71b positioniert. Somit ist die Erfassungsrichtung z des anderen Magnetfeldsensors 21b nicht-orthogonal zu dem Magnetfeld B(t) des anderen Leiterabschnitts 71b. Somit ändern die Sensorsignale S21a(t), S21b(t) bzw. ihre Sinusschwingungen über einen Durchmesser der Spule 24a, insbesondere in der horizontalen Richtung x, zwischen gleichphasig und gegenphasig. Somit ist die Phasenverschiebung PV im Bereich zwischen 0 und π, insbesondere π/2, wie in Fig. 8 gezeigt. Somit wird das Bewegen des Grünflächenbearbeitungsroboters 20 zum Andocken in Fig. 7 geradeaus bzw. nach oben gesteuert und somit derart, dass der eine Magnetfeldsensor 21a in der Erfassungsrichtung z über dem einen Leiterabschnitt 71a positioniert ist bzw. bleibt, und somit dass die Erfassungsrichtung z des einen Magnetfeldsensors 21a orthogonal zu dem Magnetfeld B(t) des einen Leiterabschnitts 71a ist bzw. bleibt, und somit dass die Phasenverschiebung PV im Bereich zwischen 0 und π, insbesondere π/2, ist bzw. bleibt.

Somit folgt der Grünflächenbearbeitungsroboter 20 der Leiteranordnung 70, insbesondere bis zu einem Andocken an die Dockingstation 60.

Des Weiteren weist das Verfahren den Schritt auf: Positionieren des Grünflächenbearbeitungsroboters 20 im Bereich des Magnetfelds B(t) derart, dass das Magnetfeld B(t) in mindestens einem der zwei Magnetfeldsensoren 21a, 21b das Sensorsignal S21a(t), S21b(t) verursacht, wie in Fig. 1 gezeigt. Durchführen des Schritts a) und/oder des Schritts b) zeitlich danach.

Im gezeigten Ausführungsbeispiel erfolgt das Positionieren mittels eines weiteren Magnetfelds einer weiteren elektrischen Leiteranordnung 75, insbesondere des Systems 1, insbesondere des Dockingstationsystem 50.

Wie die gezeigten und oben erläuterten Ausführungsbeispiele deutlich machen, stellt die Erfindung ein vorteilhaftes Verfahren zum Andocken von einem autonomen mobilen Grünflächenbearbeitungsroboter an eine Dockingstation bereit, das verbesserte Eigenschaften aufweist. Des Weiteren stellt die Erfindung ein vorteilhaftes Dockingstationssystem aufweisend eine Dockingstation, ein vorteilhaftes Grünflächenbearbeitungssystem aufweisend einen autonomen mobilen Grünflächenbearbeitungsroboter und ein vorteilhaftes System aufweisend ein solches Grünflächenbearbeitungssystem und ein, insbesondere solches, Dockingstationsystem bereit.

## Patentansprüche

1. Verfahren zum Andocken von einem autonomen mobilen Grünflächenbearbeitungsroboter (20) an eine Dockingstation (60),
- wobei im Bereich der Dockingstation (60) eine elektrische Leiteranordnung (70) verläuft, wobei die Leiteranordnung (70) dazu ausgebildet ist, dass durch die Leiteranordnung (70) ein periodischer Strom (l(t)) fließt, wobei der Strom (I(t)) ein periodisches Magnetfeld (B(t)) erzeugt,
- wobei der Grünflächenbearbeitungsroboter (20) zwei Magnetfeldsensoren (21a, 21b) aufweist, wobei die zwei Magnetfeldsensoren (21a, 21b) dazu ausgebildet sind, dass das Magnetfeld (B(t)) in den Magnetfeldsensoren (21a, 21b) jeweils ein periodisches Sensorsignal (S21a(t), S21b(t)) verursacht,
- wobei das Verfahren die Schritte aufweist:
a) Bestimmen einer Phasenverschiebung (PV) zwischen den zwei Sensorsignalen (S21a(t), S21b(t)) oder auf den Sensorsignalen (S21a(t), S21b(t)) basierenden Signalen, und
b) Steuern eines Bewegens des Grünflächenbearbeitungsroboters (20) zum Andocken in Abhängigkeit der bestimmten Phasenverschiebung (PV),
- **dadurch gekennzeichnet, dass** das Steuern des Bewegens des Grünflächenbearbeitungsroboters (20) zum Andocken in Abhängigkeit der bestimmten Phasenverschiebung (PV) aufweist: Regeln derart, dass die Phasenverschiebung (PV) im Bereich zwischen 0 und π ist.

2. Verfahren nach Anspruch 1,
- wobei die Dockingstation (60) eine Stationandockachse (60A) aufweist,
- wobei die Leiteranordnung (70) mit mindestens einem Leiterabschnitt (71a, 71b) etwa parallel zu der Stationandockachse (60A) verläuft.

3. Verfahren nach Anspruch 2,
- wobei der Grünflächenbearbeitungsroboter (20) eine Roboterandockachse (20A) aufweist,
- wobei der Schritt b) aufweist: Steuern derart, dass der Grünflächenbearbeitungsroboter (20) sich mit seiner Roboterandockachse (20A) etwa koaxial zu der Stationandockachse (60A) ausgerichtet zu der Dockingstation (60) bewegt.

4. Verfahren nach Anspruch 2 oder 3,
- wobei der Grünflächenbearbeitungsroboter (20) eine Bewegungsebene (20E) aufweist,
- wobei die zwei Magnetfeldsensoren (21a, 21b) jeweils eine zu der Bewegungsebene (20E) etwa orthogonale Erfassungsrichtung (z) aufweisen und dazu ausgebildet sind, dass nur eine zu der Erfassungsrichtung (z) parallele Komponente (Bz(t)) des Magnetfelds (B(t)) in den Magnetfeldsensoren (21a, 21b) jeweils das Sensorsignal (S21a(t), S21b(t)) verursacht,
- wobei der Schritt b) aufweist: Steuern derart, dass einer der zwei Magnetfeldsensoren (21a) in der Erfassungsrichtung (z) über dem mindestens einen Leiterabschnitt (71a) positioniert ist und ein anderer der zwei Magnetfeldsensoren (21b) in der Erfassungsrichtung (z) nicht über dem mindestens einen Leiterabschnitt (71b) positioniert ist.

5. Verfahren nach Anspruch 3 oder 4,
- wobei die Leiteranordnung (70) mindestens zwei Leiterabschnitte aufweist (71a, 71b), wobei die zwei Leiterabschnitte (71a, 71b) jeweils etwa parallel zu der Stationandockachse (60A) verlaufen und voneinander in einer zu der Stationandockachse (60A) orthogonalen Leiterabstandsrichtung (x) einen Summenleiterabstand (71aD'+71bD') aufweisen, und
- wobei die zwei Magnetfeldsensoren (21a, 21b) voneinander in einer zu der Roboterandockachse (20A) orthogonalen Sensorabstandsrichtung (x) einen Summensensorabstand (21aD+21bD) aufweisen,
- wobei der Summenleiterabstand (71aD'+71bD') verschieden von dem Summensensorabstand (21aD+21bD) ist.

6. Verfahren nach einem der Ansprüche 2 bis 5,
- wobei die Leiteranordnung (70) mindestens zwei Leiterabschnitte (71a, 71b) aufweist, wobei die zwei Leiterabschnitte (71a, 71b) jeweils etwa parallel zu der Stationandockachse (60A) verlaufen und von der Stationandockachse (60A) in einer zu der Stationandockachse (60A) orthogonalen Leiterabstandsrichtung (x) verschiedene Leiterabstände (71aD', 71bD') aufweisen, und/oder
- wobei die zwei Magnetfeldsensoren (21a, 21b) von der Roboterandockachse (20A) in einer zu der Roboterandockachse (20A) orthogonalen Sensorabstandsrichtung (x) gleiche Sensorabstände (21aD, 21bD) aufweisen.

7. Verfahren nach einem der Ansprüche 2 bis 6,
- wobei die Dockingstation (60) als eine Ladestation ausgebildet ist und mindestens einen Stationladeanschluss (65a, 65b) aufweist, wobei die Dockingstation (60) zum Aufladen durch den mindestens einen Stationladeanschluss (65a, 65b) ausgebildet ist, wobei der mindestens eine Stationladeanschluss (65a, 65b) die Stationandockachse (60A) definiert, und/oder
- wobei der Grünflächenbearbeitungsroboter (20) als ein aufladbarer Grünflächenbearbeitungsroboter ausgebildet ist und mindestens einen Roboterladeanschluss (25a, 25b) aufweist, wobei der Grünflächenbearbeitungsroboter (20) zum Aufladen durch den mindestens einen Roboterladeanschluss (25a, 25b) ausgebildet ist, wobei der mindestens eine Roboterladeanschluss (25a, 25b) die Roboterandockachse (20A) definiert.

8. Verfahren nach einem der vorhergehenden Ansprüche,
- wobei die zwei Magnetfeldsensoren (21, 21b) jeweils eine Erfassungsrichtung (z) aufweisen und dazu ausgebildet sind, dass nur eine zu der Erfassungsrichtung (z) parallele Komponente (Bz(t)) des Magnetfelds (B(t)) in den Magnetfeldsensoren (21a, 21b) jeweils das Sensorsignal (S21a(t), S21b(t)) verursacht,
- wobei der Schritt b) aufweist: Steuern derart, dass die Erfassungsrichtung (z) eines der zwei Magnetfeldsensoren (21a) orthogonal zu dem Magnetfeld (B(t)) ist und die Erfassungsrichtung (z) eines anderen der zwei Magnetfeldsensoren (21b) nicht-orthogonal zu dem Magnetfeld (B(t)) ist.

9. Verfahren nach einem der vorhergehenden Ansprüche,
- wobei die zwei Magnetfeldsensoren (21a, 21b) jeweils eine Spule (24a, 24b) aufweisen, wobei die zwei Spulen (24a, 24b) dazu ausgebildet sind, dass das Magnetfeld (B(t)) in den Spulen (24a, 24b) jeweils das Sensorsignal (S21a(t), S21b(t)) verursacht.

10. Verfahren nach einem der vorhergehenden Ansprüche,
- wobei das Verfahren den Schritt aufweist: Positionieren des Grünflächenbearbeitungsroboters (20) im Bereich des Magnetfelds (B(t)) derart, dass das Magnetfeld (B(t)) in mindestens einem der zwei Magnetfeldsensoren (21a, 21b) das Sensorsignal (S21a(t), S21b(t)) verursacht, und
- Durchführen des Schritts a) und/oder des Schritts b) zeitlich danach.

11. Dockingstationsystem (50) aufweisend:
- eine Dockingstation (60), wobei die Dockingstation (60) zum Andocken von einem autonomen mobilen Grünflächenbearbeitungsroboter (20) ausgebildet ist und eine Stationandockachse (60A) aufweist, **gekennzeichnet durch**
- eine elektrische Leiteranordnung (70) im Bereich der Dockingstation (60), wobei die Leiteranordnung (70) mindestens zwei Leiterabschnitte (71a, 71b) aufweist, wobei die zwei Leiterabschnitte (71a, 71b) jeweils etwa parallel zu der Stationandockachse (60A) verlaufen und von der Stationandockachse (60A) in einer zu der Stationandockachse (60) orthogonalen Leiterabstandsrichtung (x) verschiedene Leiterabstände (71aD', 71bD') aufweisen, und wobei die Leiteranordnung (70) dazu ausgebildet ist, dass durch die Leiteranordnung (70) ein periodischer Strom (I(t)) fließt, wobei der Strom (I(t)) ein periodisches Magnetfeld (B(t)) erzeugt,
- wobei die Leiteranordnung (70) eine Schleife ist.

12. Dockingstationsystem (50) nach Anspruch 11,
- wobei die zwei Leiterabschnitte (71a, 71b) nah an der Dockingstation (60) von der Stationandockachse (60A) die verschiedenen Leiterabstände (71aD', 71bD') aufweisen und entfernt von der Dockingstation (60) von der Stationandockachse (60A) gleiche Leiterabstände (71aD", 71bD") aufweisen.

13. Grünflächenbearbeitungssystem (10) aufweisend:
- einen autonomen mobilen Grünflächenbearbeitungsroboter (20), wobei der Grünflächenbearbeitungsroboter (20) zum Andocken an eine Dockingstation (60) ausgebildet ist und zwei Magnetfeldsensoren (21a, 21b) aufweist, wobei die zwei Magnetfeldsensoren (21a, 21b) dazu ausgebildet sind, dass ein periodisches Magnetfeld (B(t)) in den Magnetfeldsensoren (21a, 21b) jeweils ein periodisches Sensorsignal (S21a(t), S21b(t)) verursacht,
- eine Bestimmungseinrichtung (22), wobei die Bestimmungseinrichtung (22) zum Bestimmen einer Phasenverschiebung (PV) zwischen den zwei Sensorsignalen (S21a(t), S21b(t)) oder auf den Sensorsignalen (S21a(t), S21b(t)) basierenden Signalen ausgebildet ist, und
- eine Steuerungseinrichtung (23), wobei die Steuerungseinrichtung (23) zum Steuern eines Bewegens des Grünflächenbearbeitungsroboters (20) zum Andocken in Abhängigkeit der bestimmten Phasenverschiebung (PV) ausgebildet ist,
- **dadurch gekennzeichnet, dass** das Steuern des Bewegens des Grünflächenbearbeitungsroboters (20) zum Andocken in Abhängigkeit der bestimmten Phasenverschiebung (PV) aufweist: Regeln derart, dass die Phasenverschiebung (PV) im Bereich zwischen 0 und π ist.

14. System (1) aufweisend:
- mindestens ein Grünflächenbearbeitungssystem (10) nach Anspruch 13,
- mindestens ein Dockingstationsystem (50), insbesondere nach Anspruch 11 oder 12, wobei das Dockingstationsystem (50) eine Dockingstation (60) und eine im Bereich der Dockingstation (60) verlaufende elektrische Leiteranordnung (70) aufweist, wobei die Dockingstation (60) zum Andocken von dem Grünflächenbearbeitungsroboter (20) ausgebildet ist, und wobei die Leiteranordnung (70) dazu ausgebildet ist, dass durch die Leiteranordnung (70) ein periodischer Strom (I(t)) fließt, wobei der Strom (I(t)) ein periodisches Magnetfeld (B(t)) erzeugt.

## Claims

1. A method for docking an autonomous mobile green area maintenance robot (20) to a docking station (60),
wherein an electrical conductor arrangement (70) runs in a region of the docking station (60), wherein the conductor arrangement (70) is designed such that a periodic current (I(t)) flows through the conductor arrangement (70), wherein the current (I(t)) generates a periodic magnetic field (B(t)), wherein the green area maintenance robot (20) has two magnetic field sensors (21a, 21b), wherein the two magnetic field sensors (21a, 21 b) are designed such that the periodic magnetic field (B(t)) respectively causes a periodic sensor signal (S21a(t), S21b(t)) in the magnetic field sensors (21a, 21b),
wherein the method comprises the steps of:
a) determining a phase shift (PV) between the two sensor signals (S21a(t), S21 b(t)) or signals based on the sensor signals (S21a(t), S21b(t)), and
b) controlling movement of the green area maintenance robot (20) for docking based on the determined phase shift (PV),
**characterised in that** controlling movement of the green area maintenance robot (20) for docking based on the determined phase shift (PV) comprises:
carrying out regulation such that the phase shift (PV) is in a range between 0 and π.

2. The method according to claim 1, wherein
the docking station (60) has a station docking axis (60A), and
at least one conductor section (71a, 71b) of the conductor arrangement (70) runs approximately parallel to the station docking axis (60A).

3. The method according to claim 2, wherein
the green area maintenance robot (20) has a robot docking axis (20A), and
step b) comprises: carrying out control such that the green area maintenance robot (20) moves to the docking station (60) with its robot docking axis (20A) aligned approximately coaxially with the station docking axis (60A).

4. The method according to claim 2 or 3, wherein
the green area maintenance robot (20) has a movement plane (20E),
the two magnetic field sensors (21a, 21b) each have a capture direction (z) approximately orthogonal to the movement plane (20E) and are designed such that only a component (Bz(t)) of the magnetic field (B(t)) that is parallel to the capture direction (z) respectively causes the sensor signal (S21a(t), S21 b(t)) in the magnetic field sensors (21a, 21b), and
step b) comprises: carrying out control such that one of the two magnetic field sensors (21a) is positioned above the at least one conductor section (71a) in the capture direction (z) and another of the two magnetic field sensors (21b) is not positioned above the at least one conductor section (71b) in the capture direction (z).

5. The method according to claim 3 or 4, wherein
the conductor arrangement (70) has at least two conductor sections (71a, 71b), wherein the two conductor sections (71a, 71b) each run approximately parallel to the station docking axis (60A) and have a total conductor spacing (71aD'+71bD') from one another in a conductor spacing direction (x) orthogonal to the station docking axis (60A),
the two magnetic field sensors (21a, 21b) have a total sensor spacing (21aD+21bD) from one another in a sensor spacing direction (x) orthogonal to the robot docking axis (20A), and
the total conductor spacing (71aD'+71bD') differs from the total sensor spacing (21aD+21bD).

6. The method according to any one of claims 2 to 5, wherein
the conductor arrangement (70) has at least two conductor sections (71a, 71b), wherein the two conductor sections (71a, 71b) each run approximately parallel to the station docking axis (60A) and have different conductor spacings (71aD', 71bD') from the station docking axis (60A) in a conductor spacing direction (x) orthogonal to the station docking axis (60A), and/or
the two magnetic field sensors (21a, 21b) have identical sensor spacings (21aD, 21 bD) from the robot docking axis (20A) in a sensor spacing direction (x) orthogonal to the robot docking axis (20A).

7. The method according to any one of claims 2 to 6, wherein
the docking station (60) is designed as a charging station and has at least one station charging connection (65a, 65b), wherein the docking station (60) is designed to charge by the at least one station charging connection (65a, 65b), wherein the at least one station charging connection (65a, 65b) defines the station docking axis (60A), and/or
the green area maintenance robot (20) is designed as a rechargeable green area maintenance robot and has at least one robot charging connection (25a, 25b), wherein the green area maintenance robot (20) is designed to be charged by the at least one robot charging connection (25a, 25b), wherein the at least one robot charging connection (25a, 25b) defines the robot docking axis (20A).

8. The method according to any of the preceding claims, wherein
the two magnetic field sensors (21a, 21b) each have a capture direction (z) and are designed such that only a component (Bz(t)) of the magnetic field (B(t)) that is parallel to the capture direction (z) respectively causes the sensor signal (S21a(t), S21b(t)) in the magnetic field sensors (21a, 21b), and step b) comprises: carrying out control such that the capture direction (z) of one of the two magnetic field sensors (21a) is orthogonal to the magnetic field (B(t)) and the capture direction (z) of another of the two magnetic field sensors (21b) is not orthogonal to the magnetic field (B(t)).

9. The method according to any one of the preceding claims, wherein
the two magnetic field sensors (21a, 21b) each have a coil (24a, 24b), wherein the two coils (24a, 24b) are designed such that the magnetic field (B(t)) respectively causes the sensor signal (S21a(t), S21b(t)) in the coils (24a, 24b).

10. The method according to any one of the preceding claims, wherein the method comprises the step of:
positioning the green area maintenance robot (20) in the region of the magnetic field (B(t)) such that the magnetic field (B(t)) causes the sensor signal (S21a(t), S21b(t)) in at least one of the two magnetic field sensors (21a, 21b), and
subsequently carrying out step a) and/or step b).

11. A docking station system (50), comprising:
a docking station (60), wherein the docking station (60) is designed to dock an autonomous mobile green area maintenance robot (20) and has a station docking axis (60A), **characterised by** an electrical conductor arrangement (70) in the region of the docking station (60), wherein the conductor arrangement (70) has at least two conductor sections (71a, 71b), wherein the two conductor sections (71a, 71b) each run approximately parallel to the station docking axis (60A) and have different conductor spacings (71aD', 71bD') from the station docking axis (60A) in a conductor spacing direction (x) orthogonal to the station docking axis (60A), and wherein the conductor arrangement (70) is designed such that a periodic current (I(t)) flows through the conductor arrangement (70), wherein the current (I(t)) generates a periodic magnetic field (B(t)), wherein the conductor arrangement (70) is a loop.

12. The docking station system (50) according to claim 11, wherein
the two conductor sections (71a, 71b) have the different conductor spacings (71aD', 71bD') from the station docking axis (60A) close to the docking station (60) and have identical conductor spacings (71aD", 71bD") from the station docking axis (60A) remote from the docking station (60).

13. A green area maintenance system (10), comprising:
an autonomous mobile green area maintenance robot (20), wherein the green area maintenance robot (20) is designed to dock to a docking station (60) and has two magnetic field sensors (21a, 21b), wherein the two magnetic field sensors (21a, 21b) are designed such that a periodic magnetic field (B(t)) respectively causes a periodic sensor signal (S21a(t), S21b(t)) in the magnetic field sensors (21a, 21b),
a determination device (22), wherein the determination device (22) is designed to determine a phase shift (PV) between the two sensor signals (S21a(t), S21b(t)) or signals based on the sensor signals (S21a(t), S21b(t)), and
a control device (23), wherein the control device (23) is designed to control movement of the green area maintenance robot (20) for docking on the basis of the determined phase shift (PV),
**characterised in that** controlling movement of the green area maintenance robot (20) for docking based on the determined phase shift (PV) comprises: carrying out regulation such that the phase shift (PV) is in a range between 0 and π.

14. A system (1), comprising:
at least one green area maintenance system (10) according to claim 13,
at least one docking station system (50), in particular according to claim 11 or 12, wherein the docking station system (50) has a docking station (60) and an electrical conductor arrangement (70) running in the region of the docking station (60), wherein the docking station (60) is designed to dock the green area maintenance robot (20), and wherein the conductor arrangement (70) is designed such that a periodic current (I(t)) flows through the conductor arrangement (70), wherein the current (I(t)) generates a periodic magnetic field (B(t)).

## Revendications

1. Procédé d'accueil d'un robot de traitement d'espaces verts mobile autonome (20) à une station d'accueil (60),
- un agencement de conducteur électrique (70) s'étendant dans la zone de la station d'accueil (60), l'agencement de conducteur (70) étant configuré pour qu'un courant périodique (l(t)) circule à travers l'agencement de conducteur (70), le courant (l(t)) générant un champ magnétique périodique (B(t)),
- le robot de traitement d'espaces verts (20) présentant deux capteurs de champ magnétique (21a, 21b), les deux capteurs de champ magnétique (21a, 21b) étant configurés pour que le champ magnétique (B(t)) dans les capteurs de champ magnétique (21a, 21b) provoque respectivement un signal de capteur périodique (S21a(t), S21b(t)),
- le procédé présentant les étapes suivantes :
a) la détermination d'un déphasage (PV) entre les deux signaux de capteur (S21a(t), S21b(t)) ou des signaux basés sur les signaux de capteur (S21a(t), S21b(t)), et
b) la commande d'un déplacement du robot de traitement d'espaces verts (20) pour l'accueil en fonction du déphasage déterminé (PV),
- **caractérisé en ce que** la commande du déplacement du robot de traitement d'espaces verts (20) pour l'accueil en fonction du déphasage déterminé (PV) présente : le réglage de telle sorte que le déphasage (PV) est dans la plage entre 0 et π.

2. Procédé selon la revendication 1,
- la station d'accueil (60) présentant un axe d'accueil de station (60A),
- l'agencement de conducteur (70) s'étendant avec au moins une section de conducteur (71a, 71b) approximativement parallèlement à l'axe d'accueil de station (60A).

3. Procédé selon la revendication 2,
- le robot de traitement d'espaces verts (20) présentant un axe d'accueil de robot (20A),
- l'étape b) présentant : la commande de telle sorte que le robot de traitement d'espaces verts (20) se déplace vers la station d'accueil (60) avec son axe d'accueil de robot (20A) orienté approximativement coaxialement à l'axe d'accueil de station (60A).

4. Procédé selon la revendication 2 ou 3,
- le robot de traitement d'espaces verts (20) présentant un plan de déplacement (20E),
- les deux capteurs de champ magnétique (21a, 21b) présentant chacun une direction de détection (z) approximativement orthogonale au plan de déplacement (20E) et étant configurés pour que seule une composante (Bz(t)) du champ magnétique (B(t)) parallèle à la direction de détection (z) dans les capteurs de champ magnétique (21a, 21b) provoque respectivement le signal de capteur (S21a(t), S21b(t)),
- l'étape b) présentant : la commande de telle sorte que l'un des deux capteurs de champ magnétique (21a) est positionné dans la direction de détection (z) au-dessus de l'au moins une section de conducteur (71a) et qu'un autre des deux capteurs de champ magnétique (21b) n'est pas positionné dans la direction de détection (z) au-dessus de l'au moins une section de conducteur (71b).

5. Procédé selon la revendication 3 ou 4,
- l'agencement de conducteur (70) présentant au moins deux sections de conducteur (71a, 71b), les deux sections de conducteur (71a, 71b) s'étendant chacune approximativement parallèlement à l'axe d'accueil de station (60A) et présentant l'une par rapport à l'autre une distance de conducteur cumulée (71aD'+71bD') dans une direction de distance de conducteur (x) orthogonale à l'axe d'accueil de station (60A), et
- les deux capteurs de champ magnétique (21a, 21b) présentant l'un par rapport à l'autre une distance de capteur cumulée (21aD+21bD) dans une direction de distance de capteur (x) orthogonale à l'axe d'accueil de robot (20A),
- la distance de conducteur cumulée (71aD'+71bD') étant différente de la distance de capteur cumulée (21aD+21bD).

6. Procédé selon l'une quelconque des revendications 2 à 5,
- l'agencement de conducteur (70) présentant au moins deux sections de conducteur (71a, 71b), les deux sections de conducteur (71a, 71b) s'étendant chacune approximativement parallèlement à l'axe d'accueil de station (60A) et présentant des distances de conducteur (71aD', 71b') différentes par rapport à l'axe d'accueil de station (60A) dans une direction de distance de conducteur (x) orthogonale à l'axe d'accueil de station (60A), 71bD'), et/ou
- les deux capteurs de champ magnétique (21a, 21b) présentant des distances de capteur (21aD, 21bD) égales par rapport à l'axe d'accueil de robot (20A) dans une direction de distance de capteur (x) orthogonale à l'axe d'accueil de robot (20A).

7. Procédé selon l'une quelconque des revendications 2 à 6,
- la station d'accueil (60) étant configurée sous la forme d'une station de chargement et présentant au moins une borne de chargement de station (65a, 65b), la station d'accueil (60) étant configurée pour être chargée par l'au moins une borne de chargement de station (65a, 65b), l'au moins une borne de chargement de station (65a, 65b) définissant l'axe d'accueil de station (60A), et/ou
- le robot de traitement d'espaces verts (20) étant configuré sous la forme d'un robot de traitement d'espaces verts rechargeable et présentant au moins une borne de chargement de robot (25a, 25b), le robot de traitement d'espaces verts (20) étant configuré pour être chargé par l'au moins une borne de chargement de robot (25a, 25b), l'au moins une borne de chargement de robot (25a, 25b) définissant l'axe d'accueil de robot (20A).

8. Procédé selon l'une quelconque des revendications précédentes,
- les deux capteurs de champ magnétique (21, 21b) présentant chacun une direction de détection (z) et étant configurés pour que seule une composante (Bz(t)) du champ magnétique (B(t)) parallèle à la direction de détection (z) dans les capteurs de champ magnétique (21a, 21b) provoque respectivement le signal de capteur (S21a(t), S21b(t)),
- l'étape b) comprenant : la commande de telle sorte que la direction de détection (z) de l'un des deux capteurs de champ magnétique (21a) est orthogonale au champ magnétique (B(t)) et la direction de détection (z) d'un autre des deux capteurs de champ magnétique (21b) n'est pas orthogonale au champ magnétique (B(t)).

9. Procédé selon l'une quelconque des revendications précédentes,
- les deux capteurs de champ magnétique (21a, 21b) présentant chacun une bobine (24a, 24b), les deux bobines (24a, 24b) étant configurées pour que le champ magnétique (B(t)) dans les bobines (24a, 24b) provoque respectivement le signal de capteur (S21a(t), S21b(t)).

10. Procédé selon l'une quelconque des revendications précédentes,
- le procédé présentant l'étape suivante : le positionnement du robot de traitement d'espaces verts (20) dans la zone du champ magnétique (B(t)) de telle sorte que le champ magnétique (B(t)) dans au moins l'un des deux capteurs de champ magnétique (21a, 21b) provoque le signal de capteur (S21a(t), S21b(t)), et
- la réalisation de l'étape a) et/ou de l'étape b) ensuite dans le temps.

11. Système de station d'accueil (50), présentant :
- une station d'accueil (60), la station d'accueil (60) étant configurée pour l'accueil d'un robot de traitement d'espaces verts mobile autonome (20) et présentant un axe d'accueil de station (60A), **caractérisé par**
- un agencement de conducteur électrique (70) dans la zone de la station d'accueil (60), l'agencement de conducteur (70) présentant au moins deux sections de conducteur (71a, 71b), les deux sections de conducteur (71a, 71b) s'étendant chacune approximativement parallèlement à l'axe d'accueil de station (60A) et présentant des distances de conducteur (71aD', 71bD') différentes par rapport à l'axe d'accueil de station d'accueil (60A) dans une direction de distance de conducteur (x) orthogonale à l'axe d'accueil de station d'accueil (60), et l'agencement de conducteur (70) étant configuré pour qu'un courant périodique (l(t)) circule à travers l'agencement de conducteur (70), le courant (l(t)) générant un champ magnétique périodique (B(t)),
- l'agencement de conducteur (70) étant une boucle.

12. Système de station d'accueil (50) selon la revendication 11,
- les deux sections de conducteur (71a, 71b) présentant à proximité de la station d'accueil (60) les distances de conducteur (71aD', 71bD') différentes par rapport à l'axe d'accueil de station (60A) et à l'écart de la station d'accueil (60) des distances de conducteur égales (71aD", 71bD") par rapport à l'axe d'accueil de station (60A).

13. Système de traitement d'espaces verts (10), présentant :
- un robot de traitement d'espaces verts mobile autonome (20), le robot de traitement d'espaces verts (20) étant configuré pour l'accueil à une station d'accueil (60) et présentant deux capteurs de champ magnétique (21a, 21b), les deux capteurs de champ magnétique (21a, 21b) étant configurés pour qu'un champ magnétique périodique (B(t)) dans les capteurs de champ magnétique (21a, 21b) provoque respectivement un signal de capteur périodique (S21a(t), S21b(t)),
- un appareil de détermination (22), l'appareil de détermination (22) étant configuré pour déterminer un déphasage (PV) entre les deux signaux de capteur (S21a(t), S21b(t)) ou des signaux basés sur les signaux de capteur (S21a(t), S21b(t)), et
- un appareil de commande (23), l'appareil de commande (23) étant configuré pour commander un déplacement du robot de traitement d'espaces verts (20) pour l'accueil en fonction du déphasage déterminé (PV),
- **caractérisé en ce que** la commande du déplacement du robot de traitement d'espaces verts (20) pour l'accueil en fonction du déphasage déterminé (PV) présente : le réglage de telle sorte que le déphasage (PV) est dans la plage entre 0 et π.

14. Système (1), présentant :
- au moins un système de traitement d'espaces verts (10) selon la revendication 13,
- au moins un système de station d'accueil (50), notamment selon la revendication 11 ou 12, le système de station d'accueil (50) présentant une station d'accueil (60) et un agencement de conducteur électrique (70) s'étendant dans la zone de la station d'accueil (60), la station d'accueil (60) étant configurée pour l'accueil du robot de traitement d'espaces verts (20), et l'agencement de conducteur (70) étant configuré pour qu'un courant périodique (l(t)) circule à travers l'agencement de conducteur (70), le courant (l(t)) générant un champ magnétique périodique (B(t)).
